# EUROPÄISCHE PATENTANMELDUNG

(11) **EP 4 654 406 A1**
(43) Veröffentlichungstag der Anmeldung: **26.11.2025**
(21) Anmeldenummer: 25176622.6
(22) Anmeldetag: 15.05.2025
(51) Int. Cl.: H02G 3/14

(54) **INSTALLATIONSDOSE**

(30) Priorität: 22.05.2024 DE 202024102622 U
(71) Anmelder: OBO Bettermann Hungary Kft., 2347 Bugyi (HU)
(72) Erfinder: Bubonyi, Andrea, 2030 Érd (HU); Kardos, Gyula, 2040 Budaörs (HU); Ludwig, Henrik, 58706 Menden (DE); Pávics, Dániel, 2370 Dabas (HU)
(74) Vertreter: Haverkamp Patentanwälte PartG mbB

(57) **Zusammenfassung**

Die Erfindung betrifft eine Installationsdose zur Aufnahme von elektrischen/elektronischen Komponenten, umfassend einen für eine Installation nutzbaren Hohlraum bereitstellenden Dosenkorpus mit einer Montageöffnung als Zugang zu dem Hohlraum sowie umfassend einen Deckel, mit dem die Montageöffnung verschließbar ist und der in seiner Geschlossen-Stellung mit dem Dosenkorpus an wenigstens einer Stelle verbunden ist, wobei die zum Zwecke einer Verriegelung zusammenwirkenden Teile des Verschlussmechanismus 1 durch eine translatorische Montagebewegung miteinander in Eingriff stellbar sind und wobei der Verschlussmechanismus 1 ein erstes Teil 2 mit einem Verriegelungshinterschnitt 11 als erstes Verriegelungselement, ein mit dem ersten Teil 2 verriegelbares Verschlussglied 4 als zweites Teil, das zum Zwecke seiner Verriegelung an dem ersten Teil 2 zumindest einen Verriegelungsarm 18 mit einem zum Eingriff in einen Verriegelungshinterschnitt 11 des ersten Teils 2 dienenden Hakenvorsprung 19 als zweites Verriegelungselement aufweist, sowie Mittel zum Lösen einer Ineingriffstellung der miteinander in Eingriff gestellten Verriegelungselemente umfasst, durch welches oder welche Mittel der Hakenvorsprung 19 des zumindest einen Verriegelungsarms 18 des Verschlussgliedes 4 aus dem Verriegelungshinterschnitt 11 des anderen Teils 2 herausbewegbar ist, damit die beiden Teile 2, 3 durch eine translatorische Demontagebewegung voneinander trennbar sind.

## Beschreibung

Gegenstand der Erfindung ist eine Installationsdose zur Aufnahme von elektrischen/elektronischen Komponenten, umfassend einen für eine Installation nutzbaren Hohlraum bereitstellenden Dosenkorpus mit einer Montageöffnung als Zugang zu dem Hohlraum sowie umfassend einen Deckel, mit dem die Montageöffnung verschließbar ist und der in seiner Geschlossen-Stellung mit dem Dosenkorpus an wenigstens einer Stelle verbunden ist.

Installationsdosen werden für unterschiedliche Zwecke, vor allem im Zusammenhang mit elektrischen/elektronischen Anschlüssen und/oder Verdrahtungen eingesetzt. Installationsdosen existieren in unterschiedlichen Ausgestaltungen und können je nach Ausgestaltung Unterputz oder Aufputz montiert werden. Derartige Installationsdosen verfügen über einen Dosenkorpus, der letztendlich die eigentliche Dose darstellt. Dieser Dosenkorpus verfügt über einen Boden und eine umlaufende Seitenwand, die in Abhängigkeit von der Umrissgeometrie, beispielsweise wenn diese eine rechteckförmige Umrissgeometrie aufweist, aus mehreren Seitenwandsegmenten zusammengesetzt ist. Der Dosenkorpus definiert einen Aufnahmehohlraum zur Aufnahme der darin zu installierenden elektrischen/elektronischen Komponenten. Bei den elektrischen Komponenten kann es sich beispielsweise um elektrische Verbinder handeln. Neben dem Dosenkorpus verfügt eine solche Installationsdose über einen Deckel zum Verschließen der Montageöffnung des Dosenkorpus. Der Deckel kann mit dem Dosenkorpus zum Verschließen der Montageöffnung und somit zum Verschließen des Aufnahmehohlraumes verschraubt sein. Dann verfügt der Dosenkorpus typischerweise über mehrere Schraubkanäle, in die jeweils eine den Deckel durchgreifende Schraube eingeschraubt wird. Gemäß einer anderen Ausgestaltung dient eine Rastverbindung zum Verbinden des Deckels mit dem Dosenkorpus. Bei einer solchen Ausgestaltung ist der die Montageöffnung einfassende, nach außen weisende Seitenwandabschnitt umlaufend mit einem Verriegelungshinterschnitt ausgeführt. Der Dosendeckel verfügt über einen das freie Ende der Seitenwand des Dosenkorpus übergreifenden Seitenwandabschnitt, der innenseitig eine komplementäre Verriegelungsgeometrie aufweist, sodass die komplementären Verriegelungsgeometrien von Deckel und Dosenkorpus durch Aufdrücken des Deckels auf den Dosenkorpus miteinander in Eingriff gestellt werden können.

Problematisch wird bei beiden vorstehend angesprochenen Ausgestaltungen von Installationsdosen deren Handhabung angesehen. Bei Installationsdosen, bei denen der Deckel mit Schraubbefestigern an dem Dosenkorpus anzuschließen ist, werden typischerweise mehreren Schrauben eingesetzt. Diese befinden sich typischerweise in den Ecken der Installationsdose. Entsprechend hoch ist der Aufwand, um eine solche Installationsdose zu schließen, mithin den Deckel an dem Dosenkorpus zu befestigen und ebenfalls bei Bedarf wieder zu öffnen. Überdies besteht bei einem mehrmaligen Öffnen und Schließen vor allem dann, wenn beim Schließen zu hohe Kräfte angelegt werden, die Gefahr, dass durch die Schrauben das durch diese in die Schraubkanäle eingeprägte Innengewinde beschädigt oder sogar zerstört wird, sodass dann ein bestimmungsgemäßer Verschluss nicht mehr möglich ist. Abgesehen vom Schraubaufwand können derartige Installationsdosen problemlos geöffnet werden. Ein Öffnen ist bei Installationsdosen, bei denen der Deckel mit einem Seitenwandabschnitt die Seitenwand des Dosenkorpus übergreift und daran verrastet gehalten ist, zwar auch möglich, jedoch mit einem größeren Aufwand. Hierfür wird ein Werkzeug benötigt, um den an dem Dosenkorpus durch die Rastverriegelung gehaltenen Deckel aufzuhebeln. Zu diesem Zweck wird ein Schlitzschraubendreher sukzessive an mehreren Stellen zwischen die überlappenden Seitenwandabschnitte eingeführt und dieser aufgebogen. Mitunter führt dieses zu einer Beschädigung des Seitenwandabschnittes des Deckels. Andere Installationsdosen dieser Art verfügen über in radiale Richtung nach außen abragende Betätigungslaschen zwischen die ein Schlitzschraubendreher eingeschoben und zum Zwecke einer Öffnung des Deckels gegenüber dem Dosenkorpus der Deckel aufgehebelt werden kann. Eine solche für elektrische Anwendungen vorgesehene Installationsdose ist beispielsweise aus EP 1 311 042 A1 bekannt. Bei mehrmaligem Öffnen oder Schließen kann auch bei einer solchen Ausgestaltung die Qualität der Rastverbindung zwischen dem Deckel und dem Dosenkorpus beeinträchtigt werden.

Die vorstehend anhand einer Installationsdose beschriebene Problematik stellt sich auch bei anderen Gegebenheiten, wie beispielsweise Gehäusen, die nach einem erstmaligen Verschluss auch wieder geöffnet werden müssen ein.

Vor dem Hintergrund des vorstehend gewürdigten Standes der Technik liegt der Erfindung die Aufgabe zugrunde, eine Installationsdose mit einem Verschlussmechanismus vorzuschlagen, dessen beide miteinander zu verriegelnden Teile nicht nur mit einer einfach durchzuführenden push-Bewegung miteinander in Eingriff gestellt werden können und der sich in einfacher Weise auch wieder öffnen lässt, sondern bei dem auch bei mehrmaligem Öffnen und Schließen nicht die Gefahr einer Beschädigung der miteinander in Eingriff gestellten Verriegelungselemente zu befürchten ist.

Gelöst wird diese Aufgabe erfindungsgemäß durch eine Installationsdose mit den Merkmalen des Anspruchs 1.

Diese Installationsdose verfügt über zumindest einen Verschlussmechanismus, der die Vorteile einer Rastverbindung im Zusammenhang mit dem Schließen desselben mit denjenigen, die ein definiertes Öffnen ermöglichen, vereint. Zu diesem Zweck verfügt dieser Verschlussmechanismus zum Realisieren einer Verriegelung in seiner Geschlossen-Stellung über zwei miteinander in Eingriff stellbare Teile, von denen ein erstes Teil zumindest einen Verriegelungshinterschnitt als Verriegelungselement aufweist. Das zweite Teil ist als Verschlussglied ausgeführt und verfügt zu diesem Zweck über zumindest einen Verriegelungsarm. Der Verriegelungsarm selbst trägt einen Hakenvorsprung, der in der Geschlossen-Stellung des Verschlussmechanismus in den Verriegelungshinterschnitt des ersten Teils eingreift. Bereitgestellt ist ein solcher Verriegelungshinterschnitt durch eine Ausformung im oder am ersten Teil des Verschlussmechanismus. Hierbei kann es sich beispielsweise um einen von einer Basis abragenden Pilzkopf oder auch um eine bügelartige Struktur handeln.

Gemäß einer ersten Ausgestaltung eines Verschlussgliedes eines solchen Verschlussmechanismus einer Installationsdose ist sein zumindest einer Verriegelungsarm in radialer Richtung elastisch, bezogen auf eine translatorische Montagebewegung zum Schließen des Verschlussmechanismus, ausgelegt. Bei einer solchen Ausgestaltung kann unter Ausnutzung der elastischen Eigenschaften des Verriegelungsarms sein Hakenvorsprung durch eine translatorische Montagebewegung, insbesondere eine rein lineare translatorische Montagebewegung in den Verriegelungshinterschnitt zum Verriegeln der beiden Teile eingebracht werden. Der Hakenvorsprung wird bei dieser Ausgestaltung über die Ausformung hinweggeführt, bis dieser selbsttätig in den durch die Ausformung bereitgestellten Verriegelungshinterschnitt eingreift. Damit kann das erste Teil mit dem Verschlussglied allein durch Ausführen einer push-Bewegung verriegelt werden. Gemäß einer anderen Ausgestaltung ist die Lagerung des Verschlussgliedes für seine translatorische Verstellung dergestalt ausgelegt, dass in Umfangsrichtung hinreichend Spiel vorhanden ist, damit das Verschlussglied zum Überwinden der den Verriegelungshinterschnitt bereitstellenden Ausformung mit seinem Hakenvorsprung gekippt werden kann. In einem solchen Fall braucht der Verriegelungsarm nicht in radiale Richtung elastisch ausgeführt zu sein; jedoch ist durchaus möglich.

Von Besonderheit bei diesem Verschlussmechanismus ist, dass dieser auch über Mittel verfügt, durch die die miteinander in Eingriff gestellten Verriegelungselemente abnutzungsfrei und vor allem beschädigungsfrei wieder voneinander gelöst werden können. Die Mittel sind daher ausgelegt und dazu eingerichtet, den Hakenvorsprung des zumindest einen Verriegelungsarmes, der in der Geschlossen-Stellung des Verschlussmechanismus in den Verriegelungshinterschnitt des ersten Teils eingreift, aus dem Verriegelungshinterschnitt herauszubewegen. Ist dieses erreicht, können die beiden Teile wiederum durch eine translatorische, insbesondere linear translatorische Bewegung voneinander getrennt werden. Somit verfügt dieser Verschlussmechanismus über alle für ein Schließen und Öffnen desselben erforderlichen Komponenten, um die Verriegelung einzurichten und auch wieder lösen zu können. Dieses bedeutet nicht, dass zum Betätigen des oder der Lösemittel nicht ein Werkzeug, beispielsweise ein Schraubendreher benutzt werden könnte. Dieser dient jedoch nur zum Betätigen eines Lösemittels, hingegen nicht unmittelbar zum Lösen der in Eingriff gestellten Verriegelungselemente. Daher erfolgt ein Lösen beschädigungsfrei in Bezug auf die miteinander in Eingriff gestellten Verriegelungselemente.

Vorteilhaft ist es, zwischen den miteinander zu verbindenden Teilen ein, beispielsweise als Dichtung ausgelegtes Elastomer anzuordnen, und zwar dergestalt, dass dieses Elastomer bei miteinander in Eingriff gestellten Verriegelungselementen durch die durch den Verschlussmechanismus miteinander verbundenen Teile unter eine gewisse Vorspannung gestellt ist.

Die beiden Teile eines solchen Verschlussmechanismus sind Teileiner Installationsdose. Die beiden Teile des Verschlussmechanismus können an die Installationsdose angeformt sein oder selbst als Einsatz konzipiert und anschließend an die Installationsdose angeschlossen sein. Ist eine Installationsdose mit einem solchen Verschlussmechanismus ausgerüstet, trägt der Deckel typischerweise das Verschlussglied während der Dosen- oder Gehäusekorpus das erste Teil mit dem zumindest einen Verriegelungshinterschnitt aufweist.

Das Mittel zum Lösen der miteinander in Eingriff gestellten Verriegelungselemente kann bei diesem Verschlussmechanismus auf unterschiedliche Weise realisiert sein. Gemäß einem ersten Ausführungsbeispiel ist vorgesehen, dass das Verschlussglied mit seinem zumindest einem Verriegelungsarm in einem Führungsstück in Montagerichtung verschiebbar angeordnet und insbesondere in diesem auch bei bestimmungsgemäßem Gebrauch unverlierbar gehalten ist. Eine solche Ausgestaltung erlaubt eine Auslegung des Verschlussmechanismus dahingehend, dass eine Verriegelung der beiden Teile durch Ineingriffstellen der komplementären Verbindungselemente miteinander durch eine linear ausgeführte translatorische Montagebewegung erfolgt. Eine Entriegelung der miteinander in Eingriff gestellten Verriegelungselemente kann bei einer solchen Auslegung unter Ausnutzung der vorbeschriebenen Lagerung des Verschlussgliedes in einem Führungsstück durch eine Drehbewegung des Verschlussgliedes gegenüber dem Führungsstück erfolgen. Zu diesem Zweck ist das Verschlussglied zudem drehbeweglich in dem Führungsstück gelagert ist. Die Drehachse entspricht der Achse der translatorischen Montagebewegung. Auf diese Weise kann der in einen Verriegelungshinterschnitt eingreifende Hakenvorsprung eines Verriegelungsarmes aus dem Verriegelungshinterschnitt herausgedreht und anschließend können die beiden Teile des Verschlussmechanismus ebenfalls durch eine lineare Montagebewegung voneinander getrennt werden. Die einen solchen Verriegelungshinterschnitt bereitstellende Ausformung des ersten Teils ist bei einer solchen Auslegung des Verschlussmechanismus zumindest einer Seite so weit geöffnet, dass der Hakenvorsprung durch Drehen des Verschlussgliedes aus dem Verriegelungshinterschnitt herausgedreht werden kann. Zum Herausbringen eines in einen Verriegelungshinterschnitt eingreifenden Hakenvorsprunges braucht das Verschlussglied in aller Regel um nicht mehr als 90 Grad bewegt zu werden. Wesentlich ist, dass zum Öffnen des Verschlusses das Führungsstück mit seinem Verschlussglied und das erste Teil zum Trennen der beiden Teile voneinander nicht gegeneinander verdreht werden müssen. Daher eignet sich ein solcher Verschlussmechanismus zum Einsatz in einer Vielzahl von Anwendungsmöglichkeiten.

Zum unverlierbaren Halten des Verschlussgliedes mit seinem zumindest einen Verriegelungsarm in einem solchen Führungsstück ist gemäß einer Ausgestaltung vorgesehen, dass dieses über einen Kopf verfügt. Dieser greift ein in eine Kopfaufnahme des Führungsstückes. Das Führungsstück verfügt ferner über einen die Kopfaufnahme begrenzenden Boden, der aus Richtung des Kopfes hinterschnitten ist. Das Verschlussglied durchgreift den Boden, insbesondere mit seinem zumindest einen Verriegelungsarm. Das Verschlussglied verfügt über zumindest einen Riegelarm, der bei an dem Führungsstück montiertem Verschlussglied in den durch den Boden bereitgestellten Hinterschnitt mit einer Raste eingreift. Zusätzlich zu einem solchen in radialer Richtung elastisch reagierenden Riegelarm, der es ermöglicht, dass Verschlussglied durch eine Rastung an das Führungsstück anzuschließen, kann das Verschlussglied auch über ein oder mehrere feststehende, mit dem Boden aus Sicht des Kopfes hintergreifenden Verriegelungsvorsprünge aufweisen. In einer anderen Ausgestaltung zum unverlierbaren Anschließen des Verschlussgliedes an das erste Teil kann auch ein in radialer Richtung elastisch reagierender Verriegelungsarm als Riegelarm genutzt werden. Bei einer solchen Ausgestaltung wird in geschickter Weise die in radialer Richtung elastische Eigenschaft eines solchen Verriegelungsarmes genutzt, um beispielsweise einen in radialer Richtung außenseitig an diesem angeordneten Vorsprung in den durch den Boden des Führungsstückes bereitgestellten Hinterschnitt einzubringen.

Bei einer Ausgestaltung des Verschlussmechanismus, bei dem das Verschlussglied in einem Führungsstück zum Schließen des Verschlussmechanismus verschiebbar und zum Lösen desselben drehbar gelagert ist, ist in einer bevorzugten Weiterbildung vorgesehen, dass die translatorische Demontagebewegung genutzt wird, um das Verschlussglied im Zuge dieser Demontagebewegung wieder in seine Montagestellung zu drehen, mithin in diejenige Stellung, damit die beiden Teile wiederum alleinig durch eine push-Bewegung miteinander in Eingriff gestellt werden können. Erreicht werden kann dieses beispielsweise dadurch, dass das Führungsstück oder das Verschlussglied eine entsprechend konturierte Stellkulisse und der komplementäre Bestandteil - das Verschlussglied oder das Führungsstück - eine darauf abgestützte oder darin eingreifende Stellnocke aufweist. Die Stellkulisse ist hinsichtlich ihrer Formgebung ausgelegt, damit beim Durchführen einer translatorischen Demontagebewegung zwischen den beiden Teilen das Verschlussglied in seiner Montagestellung zurückgedreht wird.

Gemäß einer Ausgestaltung eines solchermaßen konzipierten Verschlussmechanismus ist die Stellkulisse Teil einer sich in axialer Richtung erstreckenden Wand des ersten Teils. Dann trägt das zweite Teil einen in radialer Richtung abragenden Stellnocken. Bei einer solchen Ausgestaltung ist die Stellkulisse vorzugsweise dergestalt ausgeführt, dass diese als Nut in die sich in axialer Richtung erstreckende Wand eingebracht ist. Die Stellkulisse verfügt sodann auch über einen Abschnitt, in den der Stellnocken des Verschlussgliedes beim Drehen desselben zum Lösen der Ineingriffstellung der beiden Verriegelungselemente hineingebracht wird. Durch das Eingreifen des Stellnockens in diesen Ast der Stellkulisse ist zugleich eine nicht bestimmungsgemäße vorzeitige Demontage verhindert. Erst wenn der Stellnocken in den Stellkulissenabschnitt eintritt, der eine translatorische Demontagebewegung der beiden Teile des Verschlussmechanismus ermöglicht, können diese voneinander getrennt werden.

Gemäß einer anderen Ausgestaltung eines solchermaßen konzipierten Verschlussmechanismus weist das Verschlussglied eine in Umfangsrichtung wirkende Stellkulisse auf. An dieser liegt ein in radiale Richtung nach innen abragender Stellnocken des Führungsstückes an. Durch Vorbeibewegen der Stellkulisse an dem Führungsnocken im Zuge einer translatorischen Demontagebewegung der beiden Teile wird somit das erste Teil in seine Montagestellung zurückgedreht.

Gemäß einem weiteren Ausführungsbeispiel ist bei einer Ausgestaltung des zumindest einen Verriegelungsarms des Verschlussgliedes mit in radialer Richtung elastischen Eigenschaften vorgesehen, dass als Mittel zum Lösen der Ineingriffstellung der Verriegelungselemente der beiden Teile ein zusätzliches Löseglied vorgesehen ist. Bei einer solchen Ausgestaltung ist das Verschlussglied typischerweise Gegenstand desjenigen Teils, welches mit dem ersten Teil zu verbinden ist. Somit werden auch bei einer solchen Auslegung des Verschlusses nicht mehr Einzelteile benötigt als bei den zuvor beschriebenen Ausführungsbeispielen mit ihren translatorisch verstellbaren Verschlussgliedern. Das Löseglied ist in dem Verschlussglied gelagert und typischerweise auch an diesem für einen bestimmungsgemäßen Gebrauch unverlierbar gehalten. Dieses Löseglied verfügt über eine der Anzahl der Verriegelungsarme des Verschlussgliedes entsprechende Anzahl an Stelllaschen. Jede Stelllasche ist ausgelegt, damit diese bei einer translatorischen Verstellung des Lösegliedes auf einen Verriegelungsarm wirkt und diesen in radialer Richtung verstellt, sodass dessen Hakenvorsprung aus dem Verriegelungshinterschnitt des ersten Teils herausbewegt wird. Zu diesem Zweck weisen die vom Verriegelungshinterschnitt wegweisende Seite desselben und/oder die zu dem Verriegelungshinterschnitt weisende Seite der Verriegelungsarme entsprechende Stellschrägen auf. Die Stelllaschen sind ebenso wie die Verriegelungsarme des Verschlussgliedes in radialer Richtung elastisch ausgeführt. Eine radiale Bewegung der freien Betätigungsenden der Stelllaschen nach außen hin kann beispielsweise durch Anliegen einer Stelllasche an einer Stellkontur der den Verriegelungshinterschnitt bereitstellenden Ausformung des ersten Teils und eine translatorische Betätigung des Lösegliedes hervorgerufen werden. Bei der Auslegung des Verschlussmechanismus mit einem solchermaßen in dem Verschlussglied gelagerten Löseglied erfolgt eine Montage der beiden Teile zur Ineingriffstellung der komplementären Verriegelungselemente ebenso wie die Lösebetätigung allein durch eine insbesondere lineare translatorische Bewegung. Der Verschlussmechanismus dieses Ausführungsbeispiels kann daher auch als push-push-Betätigungs-Verschlussmechanismus angesprochen werden, während ein solcher des vorangegangenen Ausführungsbeispiels als push-turn-Betätigung-Verschlussmechanismus anzusprechen ist.

Unabhängig davon, ob der Verschlussmechanismus als push-turn-Mechanismus oder push-push-Mechanismus ausgelegt ist, kann vorgesehen sein, dass das erste Teil zur Bereitstellung eines Verriegelungshinterschnittes einen Pilzkopf als Verriegelungshinterschnitt bereitstellende Ausformung trägt. Bei einer solchen Ausgestaltung verfügt das Verschlussglied über zwei einander gegenüberliegende Verriegelungsarme, die sodann von gegenüberliegenden Seiten mit ihren Hakenvorsprüngen den Pilzkopf hintergreifen.

Des Weiteren kann vorgesehen sein, dass für eine Führung der beiden Teile zum Zwecke einer Montage oder Demontage diese entsprechende Führungskörper oder Führungskulissen aufweisen, wobei jeweils ein positiver Führungskörper, beispielsweise ein Führungsstift bzw. eine positive Führungskulisse in eine komplementäre Negativstruktur des anderen Teils eingreift. Zugleich ist hierdurch eine Verdrehsicherung der beiden Teile zueinander realisiert. Es ist daher ohne weiteres möglich, einen solchen Verschlussmechanismus auch zum Verschließen einer Installationsdose einzusetzen, deren Deckel nur an einer Stelle, und zwar zentrisch, an dem Dosenkörper befestigt wird. Bei Installationsdosen mit einer nicht rotationssymmetrischen Umrissgeometrie können derartige Führungen für die Stabilisierung der beiden Teile miteinander zweckdienlich sein, sind jedoch nicht erforderlich, damit die beiden Teile lagerichtig mit ihren Verriegelungselementen zueinander geführt werden.

Nachfolgend ist die Erfindung anhand von Ausführungsbeispielen unter Bezugnahme auf die beigefügten Figuren beschrieben. Es zeigen:
- **Fig. 1:**: einen nach Art einer Explosionsdarstellung gezeigten mehrteiligen Verschlussmechanismus einer im Übrigen nicht näher dargestellten Installationsdose, umfassend ein Verschlussglied, ein Führungsstück und ein erstes Teil gemäß einem ersten Ausführungsbeispiel,
- **Fig 2a, 2b:**: das Verschlussglied der Figur 1 in zwei weiteren perspektivischen Ansichten,
- **Fig. 3:**: das Führungsstück der Figur 1 in einer perspektivischen Ansicht auf seine in Figur 1 nicht sichtbare Unterseite,
- **Fig. 4:**: der mit seinen Verriegelungselementen in Eingriff gestellte Verschlussmechanismus der vorstehenden Figuren mit ausgeblendetem Führungsstück,
- **Fig. 5:**: die voneinander gelösten Verriegelungselemente zum Öffnen des Verschlussmechanismus,
- **Fig. 6:**: ein weiterer mehrteiliger Verschlussmechanismus einer im Übrigen nicht näher gezeigten Installationsdose dargestellt nach Art einer Explosionsdarstellung, umfassend ein Verschlussglied, ein Führungsstück und ein erstes Teil gemäß einem weiteren Ausführungsbeispiel,
- **Fig. 7:**: das Verschlussglied des Verschlussmechanismus der Figur 6 in einer anderen perspektivischen Darstellung als in Figur 6,
- **Fig. 8:**: das Führungsstück des Verschlussmechanismus der Figur 6 in einer perspektivischen Ansicht auf seine in Figur 1 nicht sichtbare Unterseite,
- **Fig. 9:**: der Verschlussmechanismus der Figur 6 mit ausgeblendetem Führungsstück in einer Stellung seines Verschlussgliedes vor seiner Verriegelung mit dem ersten Teil,
- **Fig. 10:**: eine perspektivische Ansicht des Verschlussmechanismus der Figur 6 mit seinen in Eingriff gestellten Verriegelungselementen mit ausgeblendetem Führungsstück,
- **Fig 11:**: ein weiterer mehrteiliger Verschlussmechanismus einer im Übrigen nicht näher gezeigten Installationsdose, umfassend ein erstes Teil, ein Verschlussglied tragendes zweites Teil und ein Löseglied,
- **Fig. 12:**: das zweite Teil des Verschlussmechanismus der Figur 11 in einer anderen perspektivischen Darstellung,
- **Fig. 13:**: eine schematisierte Schnittdarstellung durch den Verschlussmechanismus der Figur 11 mit seinen in Eingriff gestellten Verriegelungselementen,
- **Fig. 14:**: noch ein weiterer mehrteiliger Verschlussmechanismus einer im Übrigen nicht näher dargestellten Installationsdose, dargestellt nach Art einer Explosionsdarstellung, umfassend ein Verschlussglied, ein Führungsstück und ein erstes Teil,
- **Fig. 15:**: das Führungsstück des Verschlussmechanismus der Figur 14 in einer anderen Perspektive,
- **Fig. 16:**: das zweite Teil des Verschlussmechanismus der Figur 14 in einer anderen Perspektive,
- **Fig. 17:**: der Verschlussmechanismus der Figur 14 in einer ersten Montagestellung seiner beiden Teile in einer schematisierten Querschnittsdarstellung,
- **Fig. 18:**: eine Darstellung entsprechend derjenigen der Figur 17, jedoch mit den miteinander in Eingriff gestellten Verriegelungselementen,
- **Fig. 19:**: noch ein weiterer mehrteiliger Verschlussmechanismus einer im Übrigen nicht näher dargestellten Installationsdose, dargestellt nach Art einer Explosionsdarstellung, umfassend ein Verschlussglied, ein Führungsstück und ein erstes Teil,
- **Fig. 20:**: das Führungsstück des Verschlussmechanismus der Figur 19 in einer anderen Perspektive,
- **Fig. 21:**: das zweite Teil des Verschlussmechanismus der Figur 19 in einer anderen Perspektive und
- **Fig. 22:**: eine schematisierte Querschnittsdarstellung des Verschlussmechanismus der Figur 19 mit den miteinander in Eingriff gestellten Verriegelungselementen.

Die nachstehend beschriebenen mehrteiligen mechanischen Verschlussmechanismen sind jeweils Teil einer Installationsdose zur Aufnahme von elektrischen/elektronischen Komponenten. Die Installationsdose umfasst einen Dosenkorpus, durch den ein für die vorgesehene Installation nutzbarer Hohlraum bereitgestellt ist. Der Dosenkorpus verfügt über eine Montageöffnung als Zugang zu dem Hohlraum. Ferner umfasst die Installationsdose einen Deckel, mit dem die Montageöffnung verschließbar ist. In der Geschlossen-Stellung des Dosenkorpus ist der Deckel mit dem Dosenkorpus an wenigstens einer Stelle mit einem solchen Verschlussmechanismus verbunden. Bei einer in Umfangsrichtung gesehen mechanischen Auslegung der Installationsdose befindet sich typischerweise in jedem Eckbereich derselben ein solcher mehrteiliger mechanischer Verschlussmechanismus.

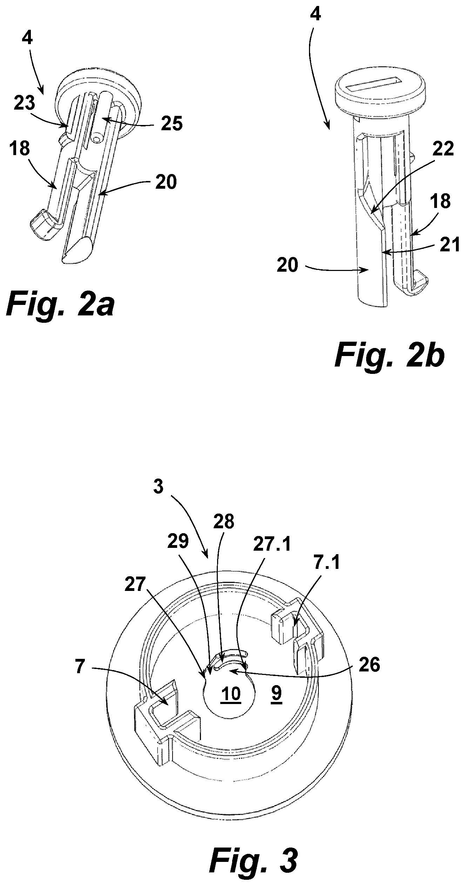

Ein mehrteiliger mechanischer Verschlussmechanismus 1 gemäß einem ersten Ausführungsbeispiel umfasst ein erstes Teil 2, ein Führungsstück 3 und ein als zweites Teil dienendes Verschlussglied 4. Das zweite Teil 2 ist typischerweise Teil einer größeren Struktur eines Nutzgegenstandes und ist beispielsweise an den Boden eines Dosenkorpus einer Installationsdose angeformt oder als Einsatz kraftschlüssig an diese angeschlossen. Gleiches gilt für das Führungsstück 3, welches im Falle einer Installationsdose an den Deckel der Installationsdose angeformt oder als Einsatz daran angeschlossen ist. Das erste Teil 2 trägt von einer Basis 5 abragend, zwei Führungsstifte 6, 6.1, die in entsprechende Führungen 7, 7.1 (siehe Figur 3) des Führungsstückes 3 eingreifen, wenn diese beiden Teile 2, 3 miteinander verbunden werden. Das Führungsstück 3 verfügt über eine Kopfaufnahme 8, die in Richtung zu dem ersten Teil 2 durch einen Boden 9 begrenzt ist. In den Boden 9 ist eine Durchbrechung 10 eingebracht, durch die ein Teil des Verschlussgliedes 4 hindurchgreift. Der Boden 9 ist aus Richtung der Kopfaufnahme 8 Verriegelungshinterschnitten (siehe auch Figur 3).

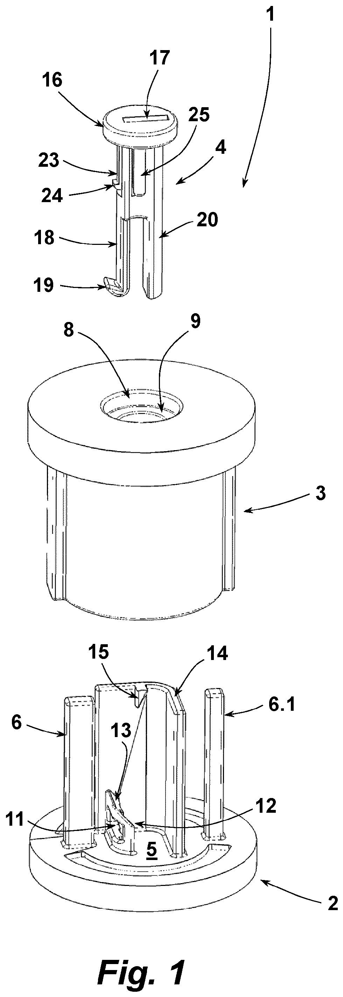

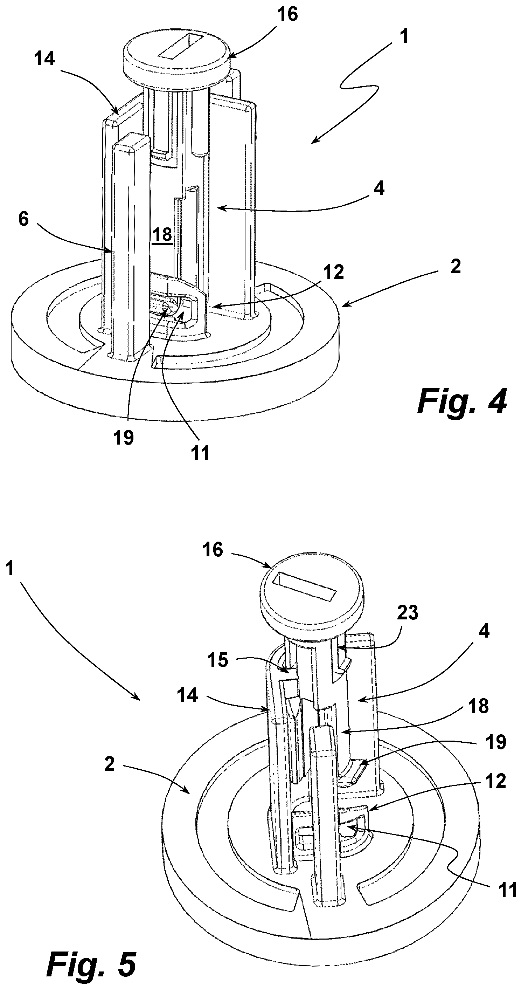

Das erste Teil trägt neben den beiden Führungsstiften 6, 6.1, ebenfalls abragend von seiner Basis 5, eine einen Verriegelungshinterschnitt 11 bildende bügelförmige Ausformung 12. Die Ausformung 12 weist oberseitig eine Stellschräge 13 auf. Die Ausformung 12 ist in Bezug auf die Ausbildung des Verrieglungshinterschnittes 11 konzipiert, dass diese an seinem in Figur 1 vorderen Ende länger bemessen ist, als erforderlich (siehe auch Figur 4). Zwischen den beiden Führungsstiften 6, 6.1 ist ein Wandsegment 14 an die Basis 5 angeformt. Das Wandsegment 14 erstreckt sich parallel zu den Führungsstiften 6, 6.1. Das Wandsegment 14 trägt im Bereich seines oberen Abschlusses an seiner zu der Ausformung 12 weisenden Seite eine Stellnocke 15.

Das Verschlussglied 4 des Verschlussmechanismus 1 verfügt über einen Kopf 16, in dessen Oberseite eine schlitzartig ausgeführte Drehmitnahmekontur 17 eingebracht ist. Angeformt an die Unterseite des Kopfes 16 ist ein Verriegelungsarm 18. Dieser ist in radialer Richtung (radial in Bezug auf seine Längserstreckung) elastisch verstellbar und trägt an seinem unteren Ende einen Hakenvorsprung 19. Dieser ragt in radialer Richtung nach außen ab und dient zum Zwecke einer Verriegelung mit dem ersten Teil durch Eingriff in den Verriegelungshinterschnitt 11 der Ausformung 12. Die Unterseite des Hakenvorsprungs 8 ist zum Zusammenwirken mit der Stellschräge 13 der Ausformung 12 konvex gekrümmt.

An die Unterseite des Kopfes 16 ist des Weiteren ein Führungszapfen 20 angeformt. Dieser ist beim Montieren des Verschlussmechanismus 1 mit seiner radialen Außenseite an der Innenseite des Wandsegmentes 14 abgestützt. Der Führungszapfen 20 ist außenseitig konvex gekrümmt und passt sich mit seiner Krümmung in die in Figur 1 erkennbare Krümmung des Wandsegmentes 14 ein. In Umfangsrichtung weisend ist eine Stirnseite des Führungszapfens 20 als Stellkulisse 21 ausgeführt. Erreicht wird dieses durch eine in Umfangsrichtung gesehen längere Ausgestaltung des unteren Abschnittes des Führungszapfens 20, der dann in einen in Umfangsrichtung gesehen schmaleren oberen Abschnitt übergeht. An den in Figur 2b erkennbaren geneigten Übergangsabschnitt 22 gelangt die Stellnocke 15 zur Anlage, wenn das Führungsstück 3 mit dem Verschlussglied 4 von dem ersten Teil demontiert wird. Bewirkt wird hierdurch, dass das Verschlussglied 4 bei der Demontage wieder in seine Montagestellung zurückgedreht wird, in der der Hakenvorsprung 19 mit der Stellschräge 13 der Ausformung 12 und damit mit dem Verriegelungshinterschnitt 11 fluchtet.

Gehalten ist das Verschlussglied 4 an dem Führungsstück 3 dadurch, dass an die Unterseite des Kopfes 16 auch ein Riegelarm 23 in Richtung der Längserstreckung des Verriegelungsarmes 18 angeformt ist. Dieser durchgreift die Durchbrechung 10, sodass seine Raste 24 in den durch den Boden 9 bereitgestellten Hinterschnitt eingreift. Das Verschlussglied 4 ist in längsaxialer Richtung innerhalb des Führungsstückes 3 verstellbar, und zwar in dem Maße des Abstandes der Unterseite des Kopfes 16 von der Raste 24.

Innerhalb der Durchbrechung 10 ist das Verschlussglied 4 auch um seine Längsachse begrenzt drehbar. Zur Begrenzung der Drehbewegung dient ein an die Unterseite des Kopfes 16 angeformter Zapfen 25, der in einer Führungskontur 26 zwischen den beiden Endanschlägen 27, 27.1 verstellbar ist. Die radial äußere Begrenzung der Führungskontur 26 wird durch eine in radialer Richtung elastisch verstellbare Rastleiste 28 bereitgestellt. Der Abstand des freien Endes der Rastleiste 28 zu dem Endanschlag 27 ist so bemessen, dass der Zapfen 25 in diese Zapfenfalle 29 einspringen kann. Hierdurch ist die Drehposition des Verschlussgliedes 4 gegenüber dem Führungsstück 3 fixiert. In dieser Stellung fluchtet der Verriegelungsarm 18 mit seinem Hakenvorsprung 19 mit der Ausformung 12 bzw. dem durch diese gebildeten Verriegelungshinterschnitt 11.

Vor einem Schließen des Verschlussmechanismus 1 ist das Verschlussglied 4 an dem Führungsstück 3 in der vorbeschriebenen Art und Weise unverlierbar gehalten. Das Verschlussglied 4 befindet sich in seiner Montagestellung, wenn der Zapfen 25 in die Zapfenfalle 29 zwischen dem freien Ende der Rastleiste 28 und dem Endanschlag 27 eingreift. In Eingriff gestellt wird das Führungsstück 3 mit seinem Verschlussglied 4 - typischerweise als Teil einer größeren Struktur, beispielsweise dem Deckel einer Installationsdose, mit dem ersten Teil 2, typischerweise ebenfalls Teil einer größeren Struktur, beispielsweise Teil eines Dosenkorpus - durch eine linear ausgeführte translatorische Montagebewegung. Dabei wird das Führungsstück 3 mit seinen Führungen 7, 7.1 auf die Führungsstifte 6, 6.1 des ersten Teils aufgesetzt und es werden beide Teile zusammengeschoben. Dabei wird der Verriegelungsarm 18 des Verschlussgliedes 4 mit seinem Hakenvorsprung 19 an die Stellschräge 13 der Ausformung 12 herangeführt. Bei weiterem Zusammendrücken von Führungsstück 3 und erstem Teil 2 wird der Hakenvorsprung 19 in radialer Richtung nach innen aufgrund des Zusammenwirkens der Stellschräge 13 mit seiner gekrümmten Unterseite verstellt und springt bei weiterem Zusammendrücken der beiden Teile 3, 2 zueinander in den Verriegelungshinterschnitt 11 ein. Dann sind die Verriegelungselemente, bereitgestellt durch den Verriegelungsarm 18 mit seinem Hakenvorsprung 19 und die Ausformung mit ihrem Verriegelungshinterschnitt 11 miteinander in Eingriff gestellt. Diese Ineingriffstellung des Verschlussmechanismus 1 ist in Figur 4 gezeigt (das Führungsstück 3 ist zum Gestatten eines Einblickes in die Verriegelungsanordnung ausgeblendet).

Nicht dargestellt ist in den Figuren, dass sich zwischen dem Führungsstück 3 und dem ersten Teil 2 eine Elastomerdichtung befindet, gegen die das Führungsstück 3 und das erste Teil 2 wirken. Durch das Schließen des Verschlussmechanismus 1 ist diese Elastomerdichtung unter eine gewisse Vorspannung gesetzt worden. Durch diese ist sodann auch die Ineingriffstellung der miteinander kooperierenden Verriegelungselemente unter eine gewisse Vorspannung gestellt.

Zum Lösen bzw. Öffnen des Verschlussmechanismus 1 wird der Hakenvorsprung 19 des Verriegelungsarmes 18 aus dem durch die Ausformung 12 bereitgestellten Verriegelungshinterschnitt 11 herausgebracht. Hierzu wird das Verschlussglied 14 gegen den Uhrzeigersinn gedreht, bei dem dargestellten Ausführungsbeispiel um etwa 70°. Dieses ist in einfacher Weise durch Verwendung eines Schlitzschraubendrehers möglich, dessen Klinge in die Drehmitnahmekontur 17 des Kopfes 16 des Verschlussgliedes 4 eingesetzt wird. Die Drehbewegung ist durch die vorbeschriebene Führungskontur 26 mit ihren Endanschlag 27.1 begrenzt. Liegt der Zapfen 25 an dem Endanschlag 27.1 an, kann das Führungsstück 3 mit dem daran gehaltenen Verschlussglied 4 mit einer ebenfalls linear ausgeführten translatorischen Demontagebewegung von dem ersten Teil 2 getrennt werden. Figur 5 zeigt den Trennvorgang, bei dem das Führungsstück 3 mit dem Verschlussglied 4 bereits etwas von dem ersten Teil 2 entfernt worden ist. Im Zuge einer solchen Demontagebewegung gelangt die Stellnocke 15 zur Anlage an den Übergangsabschnitt 22 der Stellkulisse 21 des Führungszapfens 20. Aufgrund der Neigung des Übergangsabschnittes 22 wird das Verschlussglied 4 bei weiterem Trennen des Führungsstückes 3 von dem ersten Teil 2 wieder in seine Montagestellung zurückgedreht, in welcher Montagestellung durch das Eingreifen des Zapfens 25 in die Zapfenfalle 29 das Verschlussglied 4 hinsichtlich seiner Drehstellung fixiert ist. Auf diese Weise wird das Verschlussglied 4 selbsttätig in seine Montagestellung zurückbewegt, sodass ein erneutes Schließen des Verschlussmechanismus 1, ohne weitere Maßnahmen vorsehen zu müssen, möglich ist.

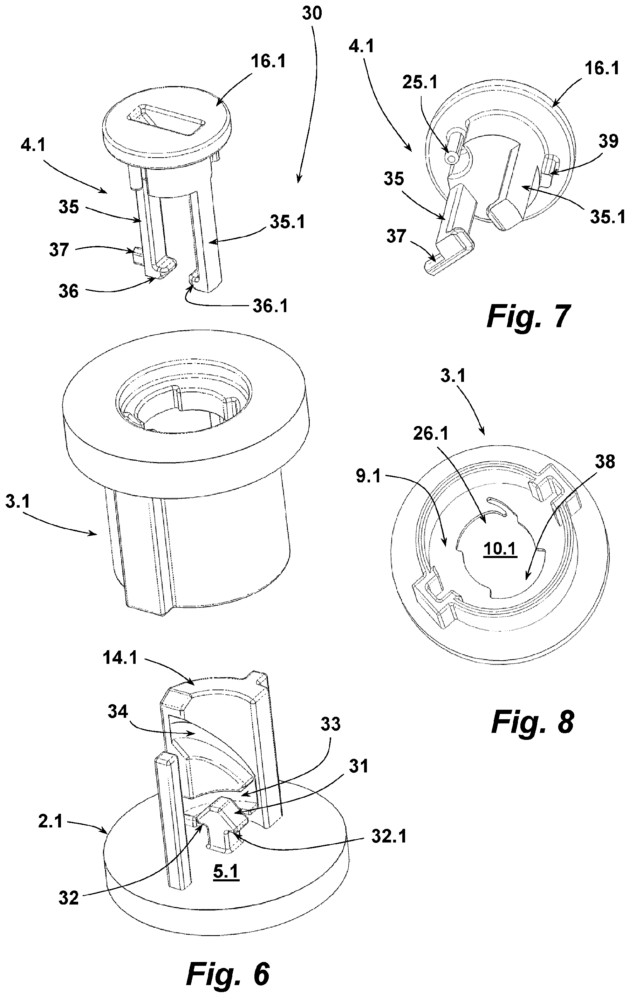

In Figur 6 ist ein weiterer mechanischer Verschlussmechanismus 30 gezeigt, der vom Prinzip her so aufgebaut ist wie der in den Figuren 1 bis 5 beschriebene Verschlussmechanismus 1. Insofern gelten die Ausführungen zu dem Verschlussmechanismus 1 gleichermaßen für den Verschlussmechanismus 30, weshalb nachstehend nur auf die Unterschiede des Verschlussmechanismus 30 gegenüber dem Verschlussmechanismus 1 eingegangen wird. Funktional gleiche Bauteile bei dem Verschlussmechanismus 30 mit denjenigen des Verschlussmechanismus 1 sind daher mit gleichen Bezugszeichen, ergänzt um das Suffix ".1" kenntlich gemacht.

Bei dem ersten Teil 2.1 des Verschlussmechanismus 30 ist der Verriegelungshinterschnitt durch einen an die Basis 5.1 angeformten Pilzkopf 31 bereitgestellt. Durch den Pilzkopf 31 sind zwei einander diametral gegenüberliegende Verriegelungshinterschnitte 32, 32.1 bereitgestellt. In das Wandsegment 14.1 ist bei diesem Ausführungsbeispiel eine aus zwei Stellkulissenabschnitten 33 und 34 bereitgestellte Stellkulisse als Nut eingebracht.

Das Verschlussglied 4.1 trägt bei dem Verschlussmechanismus 30 zwei Verriegelungsarme 35, 35.1, deren Hakenvorsprünge 36, 36.1 an den zueinander weisenden Seiten angeformt sind. Diese hintergreifen in der geschlossenen Stellung des Verschlussmechanismus 30 den Pilzkopf 31 und greifen in die Verriegelungshinterschnitte 32, 32.1 ein.

Der Verriegelungsarm 35 trägt an seiner radialen Außenseite eine Stellnocke 37. Diese wird im Zusammenhang mit dem Lösen des verriegelten Verschlussmechanismus 30 in die Stellkontur 33, 34 eingebracht und ist darin geführt.

Die Durchbrechung 10.1 in dem Boden 9.1 des Führungsstückes 3.1 verfügt über zwei Führungskonturen 26.1, 38. Während die Führungskontur 26.1 der Führungskontur 26 des Führungsstückes 3 entspricht und in dieser ebenfalls ein an die Unterseite des Kopfes 16.1 des Verschlussgliedes 4.1 angeformter Zapfen 25.1 bewegt wird, greift in die Führungskontur 38 eine Rippe 39 ein. Die Drehbewegung des Verschlussstückes 4.1 gegenüber dem Führungsstück 3.1 ist somit ebenso wie bei dem zuvor beschriebenen Ausführungsbeispiel begrenzt.

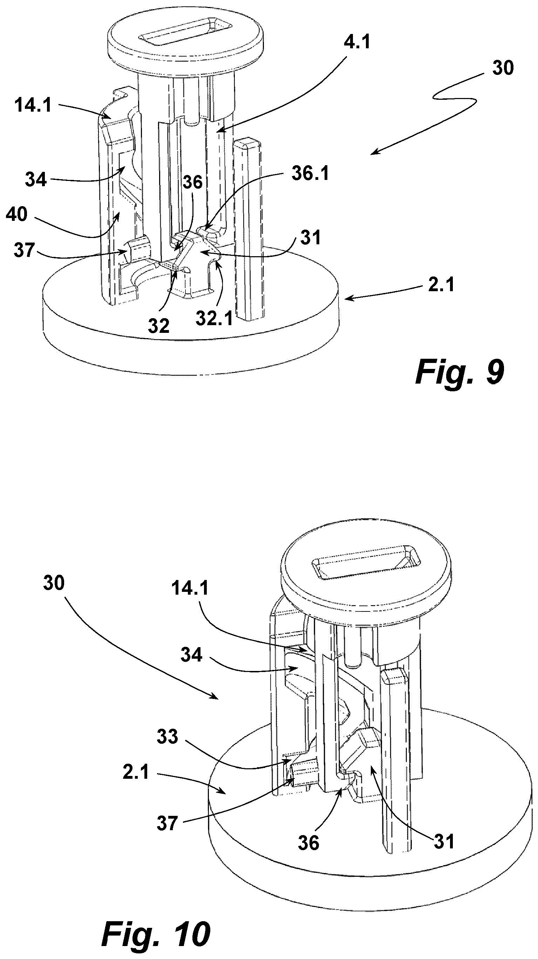

Gehalten ist das Verschlussglied 4.1 an dem Führungsstück 3.1 durch die von dem Verriegelungsarm 35 in radialer Richtung abragende Stellnocke 37, durch die ein Herausfallen des Verschlussgliedes 4.1 aus dem Führungsstück 3.1 durch entsprechendes Anschlagen an die Unterseite des Bodens 9.1 verhindert ist. Figur 9 zeigt den Verschlussmechanismus 30 mit ausgeblendetem Führungsstück 3.1 bei einer Montage des Führungsstückes 3.1 mit seinem Verschlussglied 4.1 an dem ersten Teil 2.1. Das Führungsstück 3.1 ist bereits so weit montiert, dass die Unterseiten der Hakenvorsprünge 36, 36.1 an der Oberseite des Pilzkopfes 31 zur Anlage gelangen. Die geneigten Flächen des Pilzkopfes 31 dienen beim weiteren Eindrücken des Verschlussgliedes 4.1 zum Spreizen der Verriegelungsarme 35, 35.1, sodass ihre Hakenvorsprünge 36, 36.1 in den jeweiligen Verriegelungshinterschnitt 32 bzw. 32.1 einspringen können. Die Stellnocke 37 ist im Zuge dieser Montagebewegung an der Stirnseite 40 des Wandsegmentes 14.1 geführt.

In Figur 10 ist der Verschlussmechanismus 30 mit seinen in Eingriff gestellten Verriegelungselementen, wiederum mit ausgeblendetem Führungsstück 3.1 gezeigt. In dieser Stellung befindet sich die Stellnocke 37 am Eingang des Stellkulissenabschnittes 33 des Wandsegmentes 14.1.

Gelöst bzw. geöffnet wird der Verschlussmechanismus 30 in gleicher Weise wie dieses vorstehend zu dem Verschlussmechanismus 1 beschrieben ist.

Das Verschlussglied 4.1 wird bei diesem Ausführungsbeispiel im Uhrzeigersinn gedreht, sodass die Hakenvorsprünge 36, 36.1 aus dem jeweiligen Verriegelungshinterschnitt herausgedreht werden. Im Zuge dieser Drehbewegung gelangt die Stellnocke 37 in den Stellkulissenabschnitt 33 und erfährt in dem Übergang von dem Stellkulissenabschnitt 33 in den Stellkulissenabschnitt 34 einen Drehbegrenzungsanschlag. Anschließend können das Führungsstück 3.1 mit seinem Verschlussglied 4.1 und das erste Teil 2.1 voneinander durch eine linear ausgeführte translatorische Bewegung getrennt werden. Die Stellnocke 37 wird dann entsprechend dem geneigten Verlauf des Stellkulissenabschnittes 34 wiederum in Richtung zu der Stirnseite 40 des Wandsegmentes 14.1 geführt, sodass durch diese Maßnahme das Verschlussglied 4.1 bezüglich der Ausrichtung seiner Verriegelungsarme 36, 36.1 wieder in seine Montageposition zurückgebracht worden ist. Diese ist gegenüber dem Führungsstück 3.1 in gleicher Weise fixiert, wie dieses zuvor zu einer Fixierung des Verschlussgliedes 4 gegenüber dem Führungsstück 3 beschrieben worden ist.

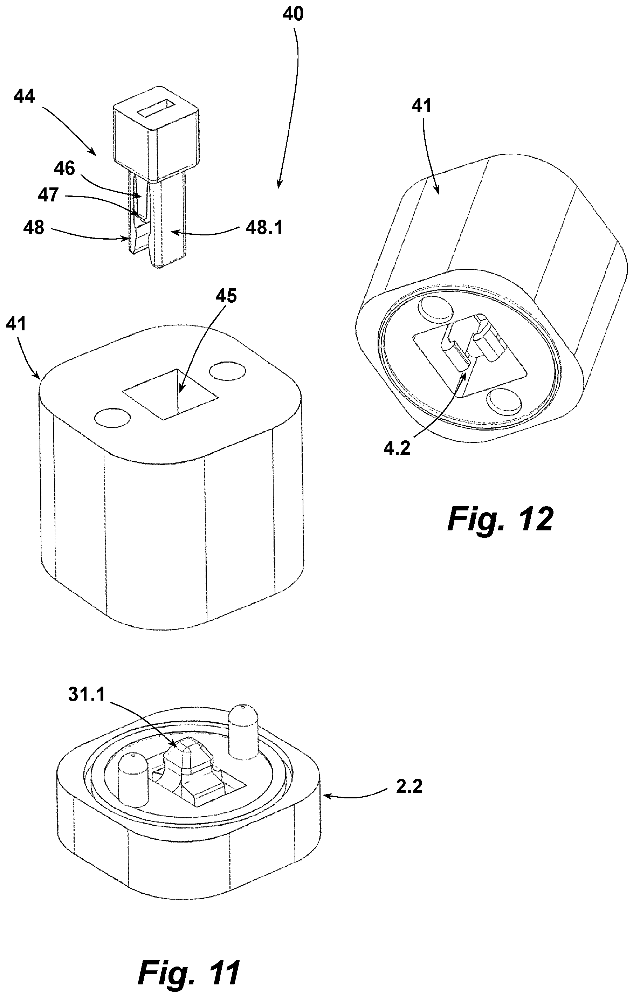

In Figur 11 ist ein weiterer mechanischer Verschlussmechanismus gezeigt. Die Verriegelung der miteinander zu verbindenden Teile erfolgt vom Prinzip her, wie dieses zu den vorstehend beschriebenen Ausführungsbeispielen dargelegt ist. Gleiche oder gleichwirkende Bauteile wie bei dem Verschlussmechanismus 1 sind mit gleichen Bezugszeichen, ergänzt um den Suffix ".2" kenntlich gemacht. Im Folgenden werden die Unterschiede des Verschlussmechanismus 40 gegenüber den bereits vorstehend beschriebenen Verschlussmechanismen 1, 30 erläutert.

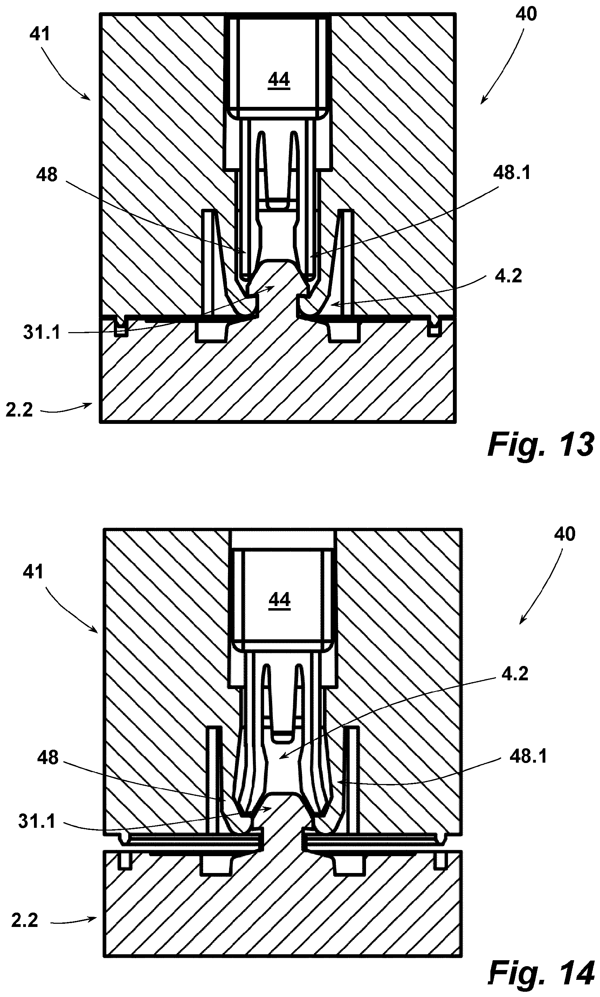

Das erste Teil 2.2 des Verschlussmechanismus 40 verfügt als Verriegelungselement ebenso wie der Verschlussmechanismus 30 über einen Pilzkopf 31.1, durch den zwei einander gegenüberliegende Verriegelungshinterschnitte bereitgestellt sind. Bei dem Verschlussmechanismus 40 ist das Verschlussglied 4.2 angeformt an ein Bauteil 41. Das Verschlussglied 4.2 verfügt über zwei Verriegelungsarme 42, 42.1, die endseitig jeweils einen Hakenvorsprung 43, 43.1 an den zueinander weisenden Seiten der Haltearme 42, 42.1 tragen. Diese hintergreifen, wie in Figur 14 gezeigt, die durch den Pilzkopf 31.1 bereitgestellten Verriegelungshinterschnitte, wenn das Bauteil 41 mit seinem Verschlussglied 4.2 mit dem ersten Teil 2.2 verbunden ist.

Der Verschlussmechanismus 40 unterscheidet sich von den beiden Verschlussmechanismen 1, 30 dadurch, dass dieser über ein Löseglied 44 verfügt. Das Löseglied 44 ist in dem Bauteil 41 in axialer Richtung einer in das Bauteil 41 eingebrachten Führungskanal 45 linear translatorisch verstellbar. Gehalten ist das Löseglied 44 an dem Bauteil 41 mittels eines Riegelarm 46, der endseitig eine nach Außen gerichtete Raste 47 trägt. Ist das Löseglied 44 an dem Bauteil 41 montiert, hintergreift die Raste 47 des Riegelarms 46 eine in dem Führungskanal 45 vorhandene Verjüngung.

Das Löseglied 44 trägt zwei Stelllaschen 48, 48.1, mit denen die Ineingriffstellung der Verriegelungsarme 42, 42.1 mit ihren Hakenvorsprüngen 43, 43.1 an dem Pilzkopf 31.1 des ersten Bauteils 2.2 gelöst werden kann. Dieses erfolgt durch eine translatorische Betätigungsbewegung, durch die das Löseglied 44, wie in Figur 13 durch einen Blockpfeil angedeutet, in den Führungskanal 45 eingedrückt wird. Die Stelllaschen 48, 48.1 werden an der Oberseite des Pilzkopfes 31.1 gegeneinander gespreizt und in den Spalt zwischen den zueinander weisenden Seiten der Verriegelungsarme 42, 42.1 und der Außenseite des Pilzkopfes 31.1 eingeführt. Dieser Spalt verjüngt sich Richtung zu den Hakenvorsprüngen 43, 43.1. Im Zuge des Eindrückens des Lösegliedes 44 und der Spreizung der Stelllaschen 48, 48.1 wirken diese mit ihren voneinander wegweisenden Außenseiten gegen die Innenseiten der Verriegelungsarme 42, 42.1, sodass auf diese Weise die Hakenvorsprünge 43, 43.1 aus den durch den Pilzkopf 31.1 bereitgestellten Verriegelungshinterschnitten herausbewegt werden. Diese Lösesituation der daran beteiligten Komponenten ist in Figur 14 gezeigt. Ist das Löseglied 44 so weit in den Führungskanal 45 des Bauteils 41 eingedrückt, dass die Verriegelung der miteinander in Eingriff gestellten Verriegelungselemente gelöst ist, können beide Komponenten - das erste Teil 2.2 und das Bauteil 41 - durch eine translatorische Demontagebewegung voneinander getrennt werden.

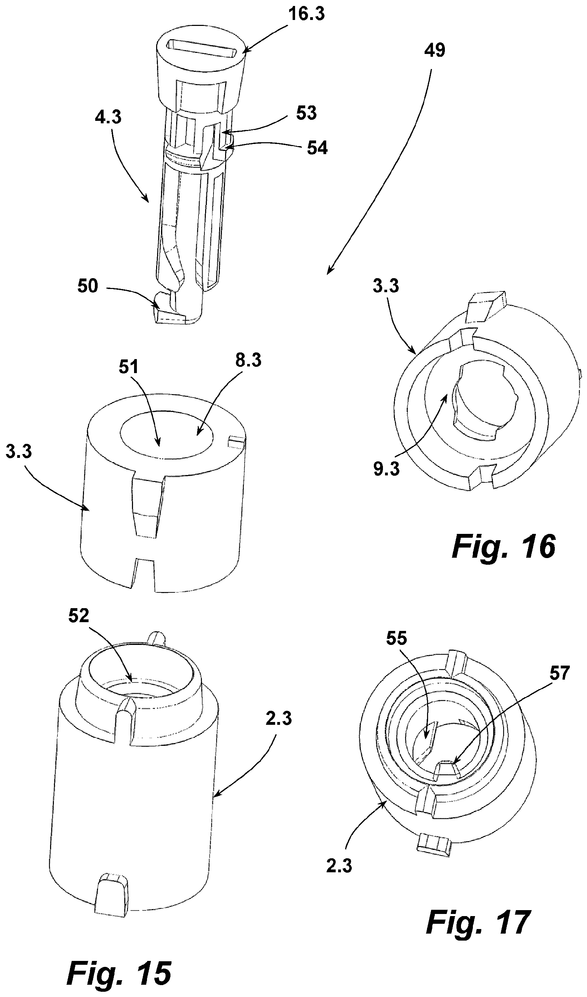

In den Figuren 15 bis 19 ist ein weiterer mechanischer Verschlussmechanismus 49 gezeigt. Der Verschlussmechanismus 49 verwirklicht dieselben Wirkprinzipien wie die vorbeschriebenen Verschlussmechanismen 1, 30 und 40. Daher sind mit dem Verschlussmechanismus 1 gleiche oder gleichwirkende Bauteile mit demselben Bezugszeichen, ergänzt um den Suffix ".3" kenntlich gemacht.

Der Verschlussmechanismus 49 unterscheidet sich von den vorbeschriebenen Verschlussmechanismen 1, 30, 40 durch die Art und Weise, wie das Verschlussglied 43 mit seinem Hakenvorsprung 50 in den durch das erste Teil 2.3 bereitgestellten Verriegelungshinterschnitt eingebracht wird. Dieses erfolgt durch eine Kippung des Verschlussgliedes 4.3 im Zuge einer Montage des Führungsstücks 3.3 auf dem ersten Teil 2.3. Um eine solche Kippung des Lösegliedes 44 zu ermöglichen, ist der Durchgangskanal 51 des Führungsstückes 3.3 und ein damit fluchtender Montagekanal 52 des ersten Teils 2.3 mit einem entsprechenden größer dimensionierten Durchmesser ausgeführt. Zugleich ist der Kopf 16.3 mit einer konischen Mantelfläche ausgestattet, ebenso wie die Kopfaufnahme 8.3 des Führungsstücks 3.3. Das Verschlussglied 4.3 ist in längsaxialer Richtung in dem Führungsstück 3.3 verstellbar gehalten, und zwar auf dieselbe Art und Weise wie dieses zu den Verschlussgliedern 4, 4.1 beschrieben ist. Eine an dem freien Ende eines Riegelarms 53 angeordnete Raste 54 hintergreift bei an dem Führungsstück 3.3 montiertem Verschlussglied 4.3 den in dem Verschlussstück 3.3 befindlichen Boden 9.3.

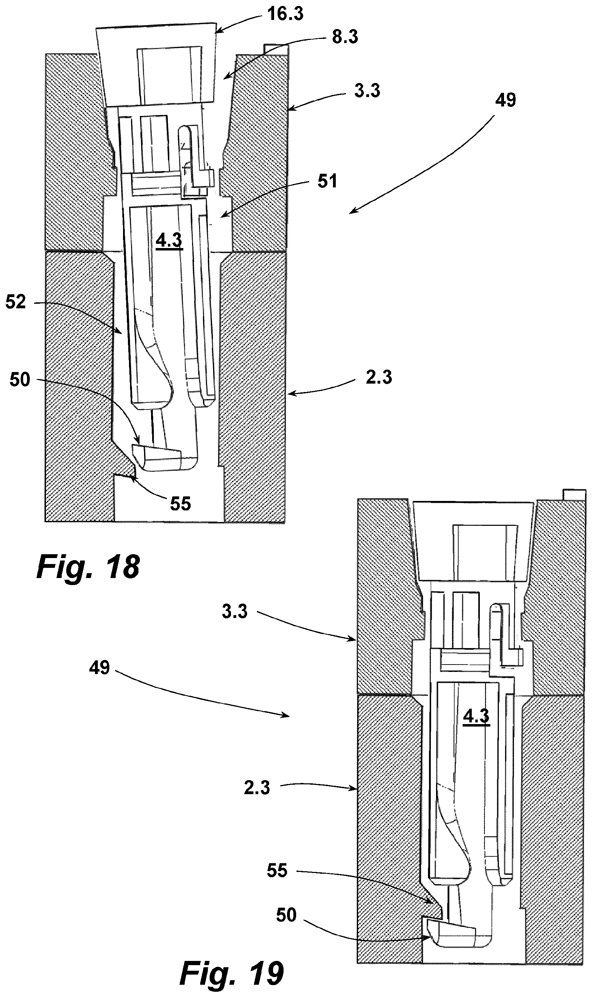

Das erste Teil 2.3 verfügt über einen in den Montagekanal 52 hineinragenden, sich nur über ein Umfangssegment erstreckenden Absatz 55 als Verriegelungshinterschnitt bildende Ausformung, dessen zum Führungsstück 3.3 weisende Oberseite, wie in den Figuren 18 und 19 erkennbar, zur Ausbildung einer Stellschräge 56 geneigt ist.

Geschlossen wird der Verschlussmechanismus 49 wiederum durch eine linear ausgeführte translatorische Bewegung, bei der das Führungsstück 3.3 mit dem ersten Teil 2.3 verbunden wird. Diese beiden Teile 2.3, 3.3 verfügen über entsprechende Führungshilfen, die bei einer solchen Montage miteinander in Eingriff gestellt werden. Im Zuge dieser Montage gelangt die Unterseite des Hakenvorsprunges 50 des Verschlussgliedes 4.3 an die Stellschräge 56 des Absatzes 55 des ersten Teils 2.3. Hierdurch wird das Verschlussglied 4.3 bei weitergeführter Montagebewegung, bis das Führungsstück 3.3 an das erste Teil 2.3 grenzt, mit seinem Kopf 16.3 aus dem Durchgangskanal 51 herausgedrückt. Aufgrund der konischen Ausgestaltung der die Kopfaufnahme 8.3 umlaufenden Wand und der entsprechenden konischen Ausgestaltung des Kopfes 16.3 des Verschlussgliedes 4.3 ist in diesem Abschnitt des Führungsstückes 3.3 in radialer Richtung Raum geschaffen, damit unter Ausnutzung der übrigen Dimensionierung des Durchgangskanals 51 und des Montagekanals 52 das Verschlussglied 4.3 gekippt werden kann. Dieses erfolgt, wenn das Verschlussglied 4.3, welches mit seinem Kopf 16.3 aus dem Durchgangskanal 51 herausgedrückt ist, in diesen eingedrückt wird. Hervorgerufen durch die Abstützung des Hakenvorsprunges 50 auf dem den Hinterschnitt bildenden Absatz 55 des ersten Teils 2.3 wird das Verschlussglied 4.3 geneigt. In dieser Stellung kann sein Hakenvorsprung 50 über den Anschlag 55 hinwegbewegt. Die komplementäre Umrissgeometrie zwischen dem Kopf 16.3 und der Kopfaufnahme 8.3 führen dazu, dass das Verschlussglied 4.3 bei entsprechendem Eindrücken desselben sich wieder ausrichtet, d. h.: aus seiner gegenüber den Längsachsen der Kanäle 51, 52 geneigten Stellung wieder in eine mit diesen mit seiner Längsachse fluchtende Stellung gebracht wird, sodass der Hakenvorsprung 50 dann in den durch den Absatz 55 bereitgestellten Verriegelungshinterschnitt eingreift. Diese Ineingriffstellung der miteinander kooperierenden Verschlussglieder zwischen dem ersten Teil 2.3 und dem Verschlussglied 4.3 ist in Figur 19 gezeigt.

Gelöst bzw. geöffnet wird der Verschlussmechanismus 49, wie dieses zu dem Verschlussmechanismus 1 beschrieben ist. Entsprechend ist auch das Verschlussglied 4.3 mit einer Stellkulisse zum Zurückdrehen des Verschlussgliedes 4.3 ausgerüstet. Mit dieser Stellkulisse wirkt eine am mündungsseitigen Abschluss des Montagekanals 52 befindliche Stellnocke 57 zusammen.

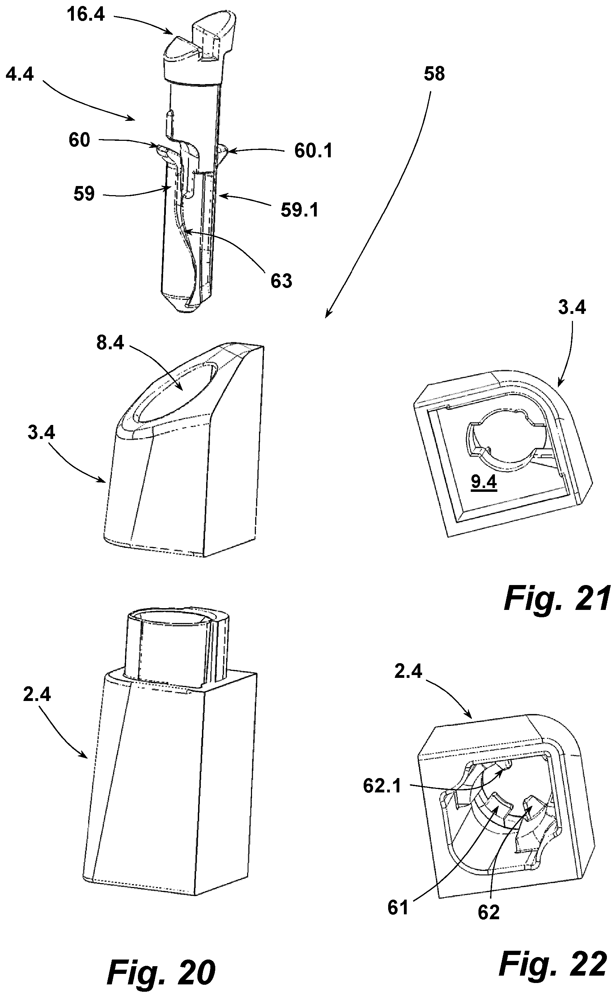

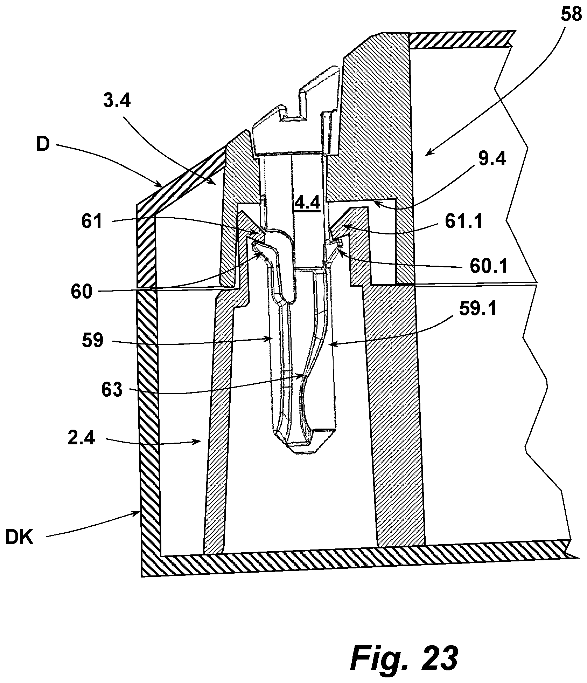

Die Figuren 19 bis 22 zeigen einen weiteren mehrteiligen mechanischen Verschlussmechanismus 58 als Teil einer Installationsdose. Dieser Verschlussmechanismus ist bezüglich seiner Funktionsweise prinzipiell aufgebaut und konzipiert wie der Verschlussmechanismus 1 der Figuren 1 bis 5. Das Verschlussglied 4.4 des Verschlussmechanismus 58 verfügt über zwei einander bezüglich der Längsachse des Verschlussgliedes 4.4 gegenüberliegende Verriegelungsarme 59, 59.1. Im Unterschied zu dem Verschlussglied 4 des Verschlussmechanismus 1 sind die Verriegelungsarme 59, 59.1 im Bereich ihres unteren Endes an die übrigen Bestandteile des Verschlussgliedes 4.4 angeformt. Die Hakenvorsprünge 60, 60.1 befinden sich daher in einem deutlich geringeren Abstand zu dem Kopf 16.4, als dieses bei dem Verschlussglied 4 des Verschlussmechanismus 1 der Fall ist. Das Führungsstück 3.4 des Verschlussmechanismus 58 verfügt ebenfalls über eine Kopfaufnahme 8.4, die unterseitig durch einen Boden 9.4 begrenzt ist. Das Verschlussglied 4.4 durchgreift die in den Boden 9.4 eingebrachte Durchbrechung. Bei diesem Ausführungsbeispiel dienen die Hakenvorsprünge 60, 60.1 gleichfalls zum Abstützen an der Unterseite des Bodens 9.4 (die in Figur 20 sichtbare Seite des Bodens 9.4), damit das Verschlussglied 4.4 grundsätzlich unverlierbar an dem Führungsstück 3.4 gehalten ist. Aus diesem Grunde wird bei diesem Ausführungsbeispiel daher kein zusätzlicher Riegelarm für die Verriegelung des Verschlussgliedes an den Boden 9.4 des Führungsstückes 3.4 benötigt. Bei dem Ausführungsbeispiel des Verschlussmechanismus 1 trägt das Verschlussglied 4 für diese Zwecke einen eigenen Verriegelungsarm 23.

Infolge der radialen Beweglichkeit der Hakenvorsprünge 60, 60.1 kann das Verschlussstück 4.4 mit einer translatorischen Bewegung (Push-Betätigung) in das erste Teil 2.4 eingesetzt und in seine Verriegelungsstellung gebracht werden. Als Verriegelungshinterschnitt des ersten Teils 2.4 dienen jeweils zwei einander gegenüberliegende Verriegelungsvorsprünge 61, von denen in der Darstellung der Figur 21 nur einer erkennbar ist. Der andere Verriegelungsvorsprung 61.1 liegt dem in dieser Figur allein erkennbaren Verriegelungsvorsprung 61 diametral zur Längsachse des ersten Teils 2.4 gegenüber. Aus der Verriegelungsstellung werden die die Verriegelungsvorsprünge 61 des ersten Teils 2.4 hintergreifenden Hakenvorsprünge 60, 61 durch eine Drehbewegung des Verschlussgliedes 4.1 herausbewegt. Hierzu verfügt der Kopf 16.4 über eine schlitzartige Drehmitnahme. Das Verschlussglied 4.4 verfügt ebenso wie die Verschlussglieder der vorbeschriebenen Figuren über eine Stellkulisse, die beim Trennen des Führungsstückes 3.4 von dem ersten Teil 2.4 dafür sorgen, dass das Verriegelungsglied 4.4 wieder in seine Montageposition mit den mit den Verriegelungsvorsprüngen 61 fluchtenden Hakenvorsprüngen 60, 60.1 verstellt wird. Das erste Teil 2.4 trägt innenseitig zu diesem Zweck zwei einander gegenüberliegende Stellnocken 62, 62.1, die an jeweils einer Stellkulisse 63 des Verschlussgliedes 4.1 anliegen.

Figur 22 zeigt in einem Querschnitt den geschlossenen Verschlussmechanismus 58. Die Hakenvorsprünge 60, 60.1 hintergreifen die Riegelvorsprünge 61, 61.1 des ersten Teils 2.4. In dieser Figur befindet sich der Verschlussmechanismus 58 in einem Eckbereich einer Installationsdose, die in dieser Figur mit ihrem Deckel D und ihrem Dosenkorpus DK angedeutet sind.

Die vorstehend beschriebenen mehrteiligen mechanischen Verschlussmechanismen sind jeweils als Teil einer Installationsdose zur Aufnahme von elektrischen/elektronischen Komponenten beschrieben worden. Dabei ist das jeweils erste Teil Teil des Dosenkorpus während das Führungsstück Teil eines der Installationsdose zugehörigen Deckels ist. Der mehrteilige mechanische Verschlussmechanismus eignet sich jedoch auch für andere Anwendungen und muss nicht notwendigerweise Teil einer Installationsdose sein. Vielmehr können hierdurch auch andere Gehäuseteile, insbesondere solche anderer Anwendung zusammengehalten werden.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

**Bezugszeichenliste**

| | | | |
|---|---|---|---|
| 1 | Verschlussmechanismus | 35, 35.1 | Verriegelungsarm |
| 2, 2.1, 2.2, 2.3, 2.4 | Erstes Teil | 36, 36.1 | Hakenvorsprung |
| 3, 3.1, 3.3, 3.4 | Führungsstück | 37 | Stellnocke |
| 4, 4.1, 4.2, 4.3, 4.4 | Verschlussglied | 38 | Führungskontur |
| 5, 5.1 | Basis | 39 | Rippe |
| 6, 6.1 | Führungsstift | | |
| 7, 7.1 | Führung | 40 | Verschlussmechanismus |
| 8, 8.3, 8.4 | Kopfaufnahme | 41 | Bauteil |
| 9, 9.1, 9.3, 9.4 | Boden | 42, 42.1 | Verriegelungsarm |
| 10, 10.1 | Durchbrechung | 43, 43.1 | Hakenvorsprung |
| 11 | Verriegelungshinterschnitt | 44 | Löseglied |
| 12 | Ausformung | 45 | Führungskanal |
| 13 | Stellschräge | 46 | Riegelarm |
| 14, 14.1 | Wandsegment | 47 | Rast |
| 15 | Stellnocke | 48 | Stelllasche |
| 16, 16.1, 16.3, 16.4 | Kopf | | |
| 17 | Drehmitnahmekontur | 49 | Verschlussmechanismus |
| 18 | Verriegelungsarm | 50 | Hakenvorsprung |
| 19 | Hakenvorsprung | 51 | Durchgangskanal |
| 20 | Führungshaftens | 52 | Montagekanal |
| 21 | Stellkulisse | 53 | Riegelarm |
| 22 | Übergangsabschnitt | 54 | Raste |
| 23 | Riegelarm | 55 | Absatz |
| 24 | Raste | 56 | Stellschräge |
| 25 | Zapfen | 57 | Stellnocke |
| 26, 26.1 | Führungskontur | | |
| 27, 27.1 | Endanschlag | 58 | Verschlussmechanismus |
| 28 | Rastleiste | 59, 59.1 | Verriegelungsarm |
| 29 | Zapfenfalle | 60, 60.1 | Hakenvorsprung |
| 30 | Verschlussmechanismus | 61, 61.1 | Verriegelungsvorsprung |
| 31, 31.1 | Pilzkopf | 62, 62.1 | Stellnocke |
| 32, 32.1 | Verriegelungshinterschnitt | 63 | Stellkulisse |
| 33 | Stellkulissenabschnitt | D | Deckel |
| 34 | Stellkulissenabschnitt | DK | Dosenkorpus |

## Patentansprüche

1. Installationsdose zur Aufnahme von elektrischen/elektronischen Komponenten, umfassend einen für eine Installation nutzbaren Hohlraum bereitstellenden Dosenkorpus (DK) mit einer Montageöffnung als Zugang zu dem Hohlraum sowie umfassend einen Deckel (D), mit dem die Montageöffnung verschließbar ist und der in seiner Geschlossen-Stellung mit dem Dosenkorpus (DK) an wenigstens einer Stelle verbunden ist, **dadurch gekennzeichnet, dass** die Verbindung von Dosenkorpus (DK) und Deckel (D) an der wenigstens einen Stelle durch einen mehrteiligen Verschlussmechanismus (1, 30, 40, 49, 58) hergestellt ist, wobei die zum Zwecke einer Verriegelung zusammenwirkenden Teile des Verschlussmechanismus (1, 30, 40, 49, 58) durch eine translatorische Montagebewegung miteinander in Eingriff stellbar sind und wobei der Verschlussmechanismus (1, 30, 40, 49, 58) ein erstes Teil (2, 2.1, 2.2, 2.3, 2.4) mit einem Verriegelungshinterschnitt (11; 32, 32.1) als erstes Verriegelungselement, ein mit dem ersten Teil (2, 2.1, 2.2, 2.3, 2.4) verriegelbares Verschlussglied (4, 4.1, 4.2, 4.3, 4.4) als zweites Teil, das zum Zwecke seiner Verriegelung an dem ersten Teil (2, 2.1, 2.2, 2.3) zumindest einen Verriegelungsarm (18; 35, 35.1; 42, 42.1; 59, 59.1) mit einem zum Eingriff in einen Verriegelungshinterschnitt (11; 32, 32.1; 61, 61.1) des ersten Teils (2, 2.1, 2.2, 2.3, 2.4) dienenden Hakenvorsprung (19; 36, 36.1; 43, 43.1; 50; 60, 60.1) als zweites Verriegelungselement aufweist, sowie Mittel zum Lösen einer Ineingriffstellung der miteinander in Eingriff gestellten Verriegelungselemente umfasst, durch welches oder welche Mittel der Hakenvorsprung (19; 36, 36.1; 43, 43.1; 50; 60, 60.1) des zumindest einen Verriegelungsarms (18; 35, 35.1; 42, 42.1) des Verschlussgliedes (4, 4.1, 4.2, 4.3, 4.4) aus dem Verriegelungshinterschnitt (11; 32, 32.1; 61, 61.1) des anderen Teils (2, 2.1, 2.2, 2.3, 2.4) herausbewegbar ist, damit die beiden Teile (2, 3; 2.1, 3.1; 2.2, 41; 2.3, 3.3; 2.4, 3.4) durch eine translatorische Demontagebewegung voneinander trennbar sind.

2. Installationsdose nach Anspruch 1, **dadurch gekennzeichnet, dass** das Verschlussglied (4, 4.1, 4.2, 4.4) in einem an dem Deckel angeformten Führungsstück (3, 3.1, 3.3, 3.4) in Montagerichtung translatorisch verschiebbar gehalten ist.

3. Installationsdose nach Anspruch 1 oder 2, **dadurch gekennzeichnet, dass** der zumindest eine Verriegelungsarm (18; 35, 35.1; 42, 42.1; 59, 59.1) des Verschlussgliedes (4, 4.1, 4.2, 4.4) in radialer Richtung elastisch ausgelegt ist, damit sein Hakenvorsprung (19; 36, 36.1; 43, 43.1; 60, 60.1) unter Ausnutzung der Elastizität des Verriegelungsarms (18; 35, 35.1; 42, 42.1; 59, 59.1) in den Verriegelungshinterschnitt (4; 32, 32.1; 61, 61.1) im Zuge der translatorischen Montagebewegung selbsttätig einspringt.

4. Installationsdose nach Anspruch 2, **dadurch gekennzeichnet, dass** das Verschlussglied (4.3) in dem Führungsstück (3.3) in Umfangsrichtung mit Spiel gelagert ist, welches Spiel dergestalt bemessen ist, dass durch eine im Zuge der Montagebewegung zum Ineingriffstellen der komplementären Verriegelungselemente sich einstellende Schrägstellung des Verschlussgliedes (4.3) dessen Hakenvorsprung (50) über eine den Verriegelungshinterschnitt des ersten Teils bildende Ausformung bringbar ist.

5. Installationsdose nach einem der Ansprüche 2 bis 4, **dadurch gekennzeichnet, dass** das Führungsstück (3, 3.1, 3.3, 3.4) eine Kopfaufnahme (8, 8.3, 8.4) mit einem hinterschnittenen Boden (9, 9.1, 9.3, 9.4) und das Verschlussglied (4, 4.1, 4.3, 4.4) einen in die Kopfaufnahme (8, 8.3, 8.4) zumindest abschnittsweise einsetzbaren Kopf (16, 16.1, 16.3, 16.4) und wenigstens einen bei an dem Führungsstück (3, 3.1, 3.3, 3.4) montiertem Verschlussglied (4, 4.1, 4.3, 4.4) in den durch den Boden (9, 9.1, 9.3, 9.4) bereitgestellten Hinterschnitt eingreifenden Riegelarm (23, 46, 53; 59, 59.1) aufweist.

6. Installationsdose nach einem der Ansprüche 2 bis 5, **dadurch gekennzeichnet, dass** als Mittel zum Lösen der miteinander in Eingriff gestellten Verriegelungselemente eine Lagerung des Verschlussgliedes (4, 4.1, 4.3, 4.4) in dem Führungsstück (3, 3.1, 3.3, 3.4) um eine der Richtung der translatorischen Montagebewegung zum Schließen des Verschlussmechanismus (1, 30, 49, 58) folgende Drehachse vorgesehen ist.

7. Installationsdose nach Anspruch 6, **dadurch gekennzeichnet, dass** der Kopf (16, 16.1, 16.3, 16.4) des Verschlussgliedes (4, 4.1, 4.3, 4.4) eine Drehmitnahmekontur (17), insbesondere eine darin als Negativkontur eingebrachte Drehmitnahmekontur aufweist.

8. Installationsdose nach einem der Ansprüche 6 bis 7, **dadurch gekennzeichnet, dass** das erste Teil (2, 2.1, 2.3, 2.4) mit dem Verschlussglied (4, 4.1, 4.3, 4.4) als zweites Teil dergestalt zusammenwirkt, dass im Zuge des Trennens der beiden Teile voneinander mittels der translatorischen Demontagebewegung das Verschlussglied (4, 4.1, 4.3, 4.4) mit seinem zumindest einen Verriegelungsarm (18; 35, 35.1; 59, 59.1) entgegen der Lösedrehrichtung zurückgedreht wird, damit das Verschlussglied (4, 4.1, 4.3, 4.4) im Zuge der Demontagebewegung in seine Montagestellung verstellt wird.

9. Installationsdose nach Anspruch 8, **dadurch gekennzeichnet, dass** das erste Teil (2.1) oder das Verschlussglied (4, 4.3, 4.4) eine Stellkulisse (21, 63) und der jeweils komplementäre Bestandteil eine darauf abgestützte oder daran anliegende Stellnocke (15, 37, 57; 62, 62.1) zum Zurückdrehen des in dem Führungsstück (3, 3.1, 3.3) gelagerten Verschlussgliedes (4, 4.1, 4.3, 4.4) im Zuge der durchgeführten translatorischen Demontagebewegung aufweist.

10. Installationsdose nach Anspruch 9, **dadurch gekennzeichnet, dass** ein Verriegelungsarm (35) des Verschlussgliedes (4.1) einen in radialer Richtung abragenden Stellnocken (37) trägt, der zum Zurückstellen des Verschlussgliedes in seine Montagestellung in eine Stellkulisse einer sich in axialer Richtung erstreckenden Wand (14.1) des ersten Teils (2.1) eingreift, oder dass das Verschlussglied (4, 4.3) eine in Umfangsrichtung wirkende Stellkulisse (21, 63) aufweist und das Führungsstück (3, 3.3, 4.4) einen in radialer Richtung nach innen abragenden, an der Stellkulisse (21, 63) anliegenden Stellnocken (15, 57; 62, 62.1) trägt.

11. Installationsdose nach Anspruch 1, **dadurch gekennzeichnet, dass** in dem Verschlussglied (4.2) ein Löseglied (44) in Richtung der translatorischen Montagerichtung verstellbar angeordnet ist, das eine der Anzahl der Verriegelungsarme (42, 421) des Verschlussgliedes (4.2) entsprechende Anzahl an Stelllaschen (48, 48.1) aufweist, von denen jede infolge einer translatorischen Verstellung des Lösegliedes (44) zum Lösen der Verriegelung zwischen dem ersten Teil (2.2) und dem Verschlussglied (4.2) auf einen Verriegelungsarm (42, 42.1) zum Zwecke einer radialen Verstellung seines Hakenvorsprunges (43, 43.1) aus seiner Eingriffsstellung in einen Verriegelungshinterschnitt des ersten Teils (2.2) wirkt.

12. Installationsdose nach Anspruch 11, **dadurch gekennzeichnet, dass** das Löseglied (44) an dem Verschlussglied (4.2) gehalten ist.

13. Installationsdose nach einem der Ansprüche 1 bis 12, **dadurch gekennzeichnet, dass** das erste Teil (4.1, 4.2) einen sich von einer Basis (5.1) entgegen der translatorischen Montagerichtung erstreckenden Pilzkopf (31, 31.1) und das Verschlussglied (4.1, 4.2) zwei einander gegenüberliegende Verriegelungsarme (35, 35.1; 42, 42.1) aufweist, die mit ihren zueinander weisenden Hakenvorsprüngen (36, 36.1; 43, 43.1) bei in Eingriff gestellten Teilen den Pilzkopf (31, 31.1) hintergreifen.

14. Installationsdose nach einem der Ansprüche 1 bis 13, **dadurch gekennzeichnet, dass** zwischen den durch den Verschlussmechanismus miteinander zu verbindenden Deckel und Dosenkorpus ein Elastomer, insbesondere ein als Dichtung ausgelegtes Elastomer eingeschaltet ist, welches durch die miteinander verbundenen Bestandteile der Installationsdose unter Vorspannung gestellt ist.

15. Installationsdose nach einem der Ansprüche 1 bis 14, **dadurch gekennzeichnet, dass** das den wenigstens einen Verriegelungshinterschnitt (11; 32, 32.1) bereitstellende erste Teil (2, 2.1, 2.2, 2.3) an den Boden des Dosenkorpus, in den Hohlraum hineinragend angeformt ist.
